# EUROPEAN PATENT APPLICATION

(11) **EP 1 761 003 A1**
(43) Date of publication of application: **07.03.2007**
(21) Application number: 06018251.6
(22) Date of filing: 31.08.2006
(51) Int. Cl.: H04M 1/57, H04M 1/2745

(54) **Method for managing caller identification information in a mobile communication terminal**

(30) Priority: 02.09.2005 KR 20050081934
(71) Applicant: LG Electronics Inc., Yongdungpo-Gu Seoul 150-010 (KR)
(72) Inventor: Lim, Sang-Yeon, Bundang-Gu Seongnam Gyeonggi-Do (KR); Park, Yeon-Woo, Seocho-Gu Seoul (KR)
(74) Representative: Katérle, Axel

(57) **Abstract**

A mobile terminal and a method for managing information in the mobile terminal is achieved by storing a plurality of digital files for one or more persons that respectively have a dedicated memory location, linking the stored digital files with their respective persons previously stored in a contact list, and retrieving the linked digital files related to a particular person, when communication with that particular person is to be performed or is in progress.

## Description

### BACKGROUND

### 1. Field of the Invention

The present invention relates to a mobile communication terminal and, more particularly, to a method for managing information in a mobile communication terminal capable of enhancing user convenience.

### 2. Description of the Related Art

In general, a mobile communication terminal allows a user to wirelessly page another party and be wirelessly connected for performing communications any time and anywhere through controlling of switching by a mobile switching center (MSC) while traveling in a service area managed by a base station (BS). The mobile communication terminal can perform data communication including symbols, numbers and characters and multimedia communication including image signals, as well as voice communication. Especially, development of a mobile communication terminal with a large-scale display unit and a camera available for capturing video is actively ongoing.

In addition to its communication function, the mobile terminal provides various supplementary services that can be applied for a real life to enhance user convenience and utilization of communication. Among the supplementary services, a supplementary service for providing a function of displaying a phone number of a transmission side mobile terminal provided by a manufacturer receives high user preference.

A method for providing various caller information as well as the phone number of the transmission side mobile terminal will be described.

First, a reception side mobile terminal sets single particular contents, e.g., a sound file or an image file, which corresponds with a phone number of a transmission side mobile terminal in a one-to-one manner.

Accordingly, when the reception side mobile terminal receives a call from the transmission side mobile terminal, the reception side mobile terminal searches contents corresponding to the phone number of the transmission side mobile terminal and outputs the searched contents. Namely, if a sound file is detected, the reception side mobile terminal can reproduce the sound file, and if an image file is detected, the reception side mobile terminal can display the detected image file.

However, the related art mobile terminal has the problem that particular contents corresponding to the phone number of the transmission side mobile terminal must be previously set. That is, in order to provide various contents corresponding to the phone number of the transmission side mobile terminal, the various contents must be selected and set one by one.

### SUMMARY

One aspect of the invention is the recognition by the present inventors of the problems and disadvantages of the related art described above. Based upon this recognition, the features of the present invention were developed.

One exemplary feature of the present invention is to provide a method for providing caller information of a mobile terminal capable of improving user convenience by setting a folder for storing at least one or more contents corresponding to a phone number of a transmission side mobile terminal.

To implement at least the above feature in whole or in parts, the present invention provides a method for providing caller information of a mobile terminal including: checking whether a call is received from a transmission side mobile terminal; searching a folder that stores at least one or more contents corresponding to a phone number of the transmission side mobile terminal based on the received call; and outputting at least one or more contents stored in the searched folder.

To implement at least the above feature in whole or in parts, the present invention also provides a method for providing caller information of a mobile terminal which outputs single contents stored in a folder according to a user selection, comprising: checking whether a call button (send button) is pressed; searching a phone number corresponding to a folder in which the outputted contents are stored when the call button is pressed; and transmitting a call to a reception side mobile terminal corresponding to the searched phone number.

Additional features of the invention will be set forth in part in the description which follows and in part will become apparent to those having ordinary skill in the art upon examination of the following or may be learned from practice of the invention. The features of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
FIG. 1 is a flow chart illustrating the exemplary processes of a method for providing caller information of a mobile terminal in accordance with a first embodiment of the present invention; and
FIG. 2 is a flow chart illustrating the exemplary processes of a method for providing caller information of a mobile terminal in accordance with a second embodiment of the present invention.
FIG. 3 shows an exemplary user interface of the present invention with divided screen regions used to display different types of information with selectable options and menu items.
FIG. 4 shows an exemplary user interface of the present invention with divided screen regions used to display different types of information linked to a person selected from the user interface screens of FIG. 3.
FIG. 5 shows an exemplary user interface after selecting a send function or a message function from the user interface of FIG. 4.
FIG. 6 shows an exemplary user interface when the user is performing video telephony with another party.
FIG. 7 shows exemplary user interface screens with their relationship with various folders having contents stored therein.

### DETAILED DESCRIPTION

A method for managing information of a mobile terminal capable of improving user convenience by setting a folder (or other types of memory/storage locations) for storing at least one or more contents corresponding to a phone number (or other contact information) of a transmission side mobile terminal, in accordance with exemplary embodiments of the present invention will be described with reference to the accompanying drawings.

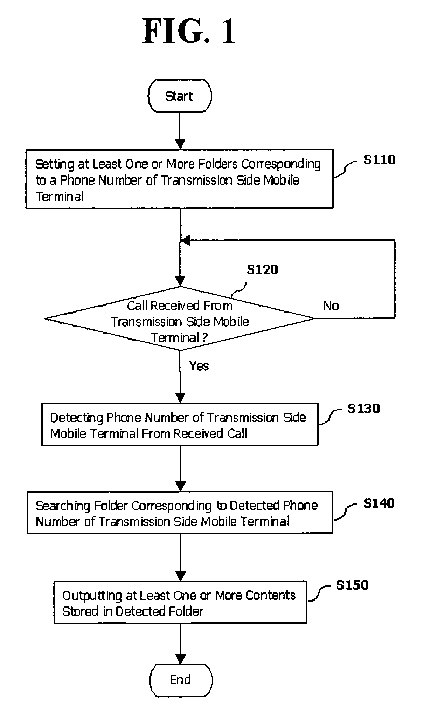

FIG. 1 is a flow chart illustrating the exemplary processes of a method for providing caller information of a mobile terminal in accordance with a first embodiment of the present invention.

As shown in FIG. 1, a method for providing caller information of a mobile terminal in accordance with the present invention may include: setting at least one or more folders corresponding to a phone number (or other contact information such as an e-mail address, Voice over Internet Protocol (VoIP) number, etc.) of a transmission side mobile terminal (step S110); checking whether a call is received from the transmission side mobile terminal (step S120); detecting a phone number (or other contact information) of the transmission side mobile terminal from the received call when the call is received (step S130); searching a folder (or other memory/storage location) corresponding to the detected phone number of the transmission side mobile terminal (step S140); and outputting at least one or more contents stored in the searched folder.

At least one or more folders can include a folder that stores all of an image file, a sound file and a message file, a folder that stores the image file, a folder that stores the sound file, or a folder that stores the message file. Herein, the image file can be a still image file or a video file, and the message file may refer to an SMS (Short Message Service) message, an LMS (Long Message Service) message or an MMS (Multimedia Message Service) message.

The method for providing caller information of a mobile terminal in accordance with the first embodiment of the present invention will be described in detail as follows.

First, the reception side mobile terminal sets at least one or more folders corresponding to the phone number of the transmission side mobile terminal (step S110). Namely, the reception side mobile terminal sets a folder that stores all of an image file, a sound file and a message file, a folder that stores the image file, a folder that stores the sound file, or a folder that stores the message, according to the phone number of the transmission side mobile terminal.

The reception side mobile terminal checks whether a call (or other transmission) is received from the transmission side mobile terminal (step S120). When a call is received from the transmission side mobile terminal, the reception side mobile terminal detects a phone number of the transmission side mobile terminal from the received call (step S130) and searches a folder corresponding to the detected phone number of the transmission side mobile terminal (step S140).

When there is a folder corresponding to the phone number of the transmission side mobile terminal, the reception side mobile terminal may output at least one or more contents stored in that folder. If there is no folder corresponding to the phone number of the transmission side mobile terminal, at least one or more contents stored in a pre-set folder may be outputted (step S150).

In this case, the reception side mobile terminal may randomly select one of multiple sound files stored in the folder and reproduce the selected sound file, whereby it can variably reproduce the sound file corresponding to the same phone number of the transmission side mobile terminal.

In addition, the reception side mobile terminal may randomly display one of the image files stored in the folder, or sequentially in the order of a name, a size and date through a display unit.

In this manner, the folder that stores at least one or more contents can be set to correspond with the phone number of the transmission side mobile terminal and a user may view image files and/or listen to sound files related to that phone number.

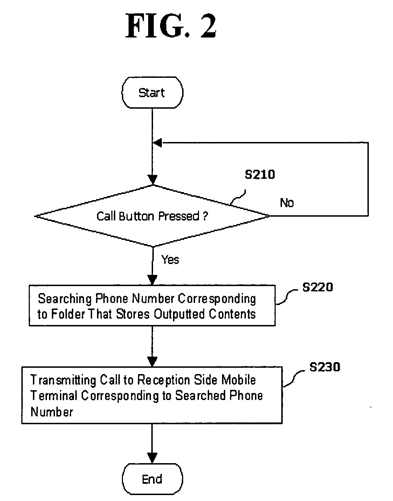

A method for managing information of a mobile terminal in accordance with a second embodiment of the present invention will now be described with reference to FIG. 2.

FIG. 2 is a flow chart illustrating the exemplary processes of a method for providing (managing) caller information of a mobile terminal in accordance with a second embodiment of the present invention.

As shown in FIG. 2, the method for providing caller information of a mobile terminal that outputs one contents stored in a folder according to a user selection in accordance with the second embodiment of the present invention may include: checking whether a call button (or other means to place a call or send data) is pressed (or activated) (step S210); searching a phone number (or other contact information) corresponding to the folder storing the outputted contents, when the call button is pressed (step S220); and transmitting a call to the reception side mobile terminal corresponding to the searched phone number (step S230).

The method for managing information (e.g., providing caller information) of a mobile terminal in accordance with the second embodiment of the present invention will now be described as follows.

First, the transmission side mobile terminal outputs one or more contents stored in the folder according to a user selection. For example, the transmission side mobile terminal can display an image file through a display unit, or can reproduce a sound file and display a message.

The transmission side mobile terminal checks whether a call button is pressed (or if other means to send data is activated) (step S210). When the call button is pressed, the transmission side mobile terminal determines that the user wants to communicate with a user of the reception side mobile terminal corresponding to the folder that stores the outputted contents, so it searches the phone number corresponding to the folder that stores the outputted contents (step S220).

Accordingly, the transmission side mobile terminal can transmit a call to the reception side mobile terminal corresponding to the searched phone number (step S230).

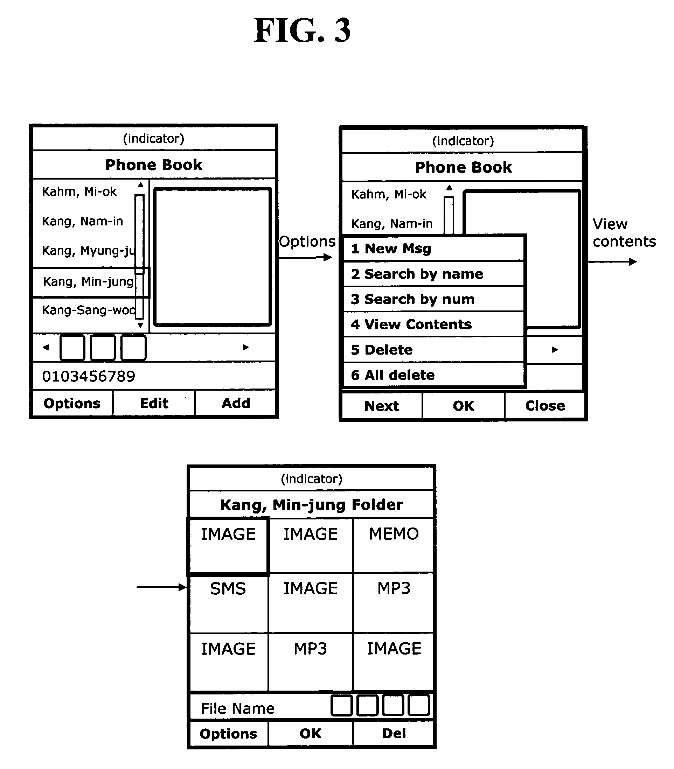

FIG. 3 shows exemplary user interface screens according to embodiments of the present invention.

Various types of contents may be stored and linked with each person of a contact list (e.g., phone book, address book, etc.). Selectable options or menu items may be displayed to the user.

The screen may be divided into a first area to display one or more items stored in a contact list, a second area to display one or more digital files that are linked to a particular item of the contact list, a third area to display user selectable options or functions to allow additional managing of information, and a fourth area to display a user selectable menu or list as a pop-up window.

Each person in the contact list can have at least one folder (or other storage location) that may be used to store different types of data, such as image data (e.g., image files, video files, etc.), text data (e.g., messages, memos, SMS, etc.), audio data (e.g., MP3 files, ring tones, etc.), and the like. Each folder may contain multiple sub-folders or other storage locations.

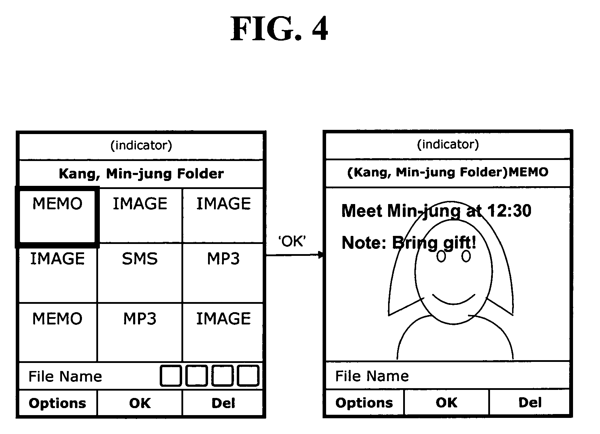

FIG. 4 shows exemplary user interface screens according to embodiments of the present invention.

Among the various types of contents stored and linked with each person of a contact list, the mobile terminal user may select one of the many stored files for viewing and/or listening. For example, a memo (such as an appointment reminder) can be viewed. As shown, the memo may be displayed in an overlapping manner together with an image or photo of that person.

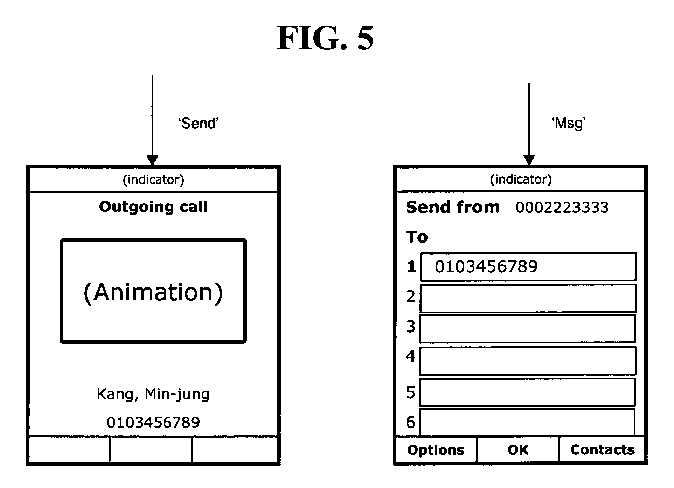

FIG. 5 shows exemplary user interface screens according to embodiments of the present invention.

While viewing and/or listening to content files related to that person, the user may then decide to call, send a message or otherwise contact that person. To do so, the user can select or activate an appropriate function (such as a send or message function). Upon selection or activation, the user interface changes to an appropriate screen for performing an outgoing call or for sending a message.

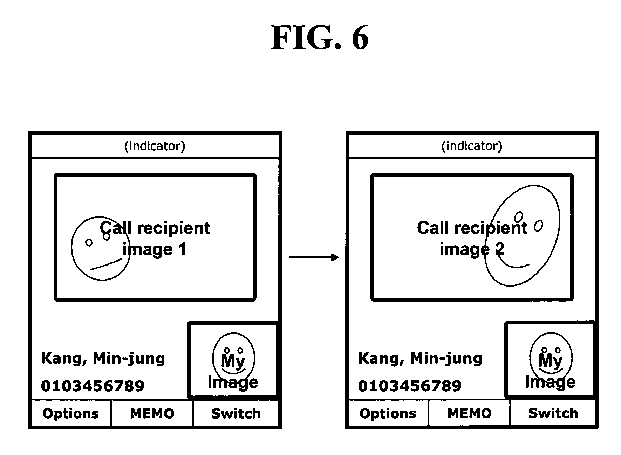

FIG. 6 shows exemplary user interface screens according to embodiments of the present invention.

Image files related to a call recipient and stored in a folder for that call recipient may be displayed in a random manner (e.g., in a slide show format) while a call (or other communication) is in progress. Also, during video telephony (e.g., a video conference call), a real-time image (or video) of the user and a real-time image (or video) of the call recipient may be displayed together.

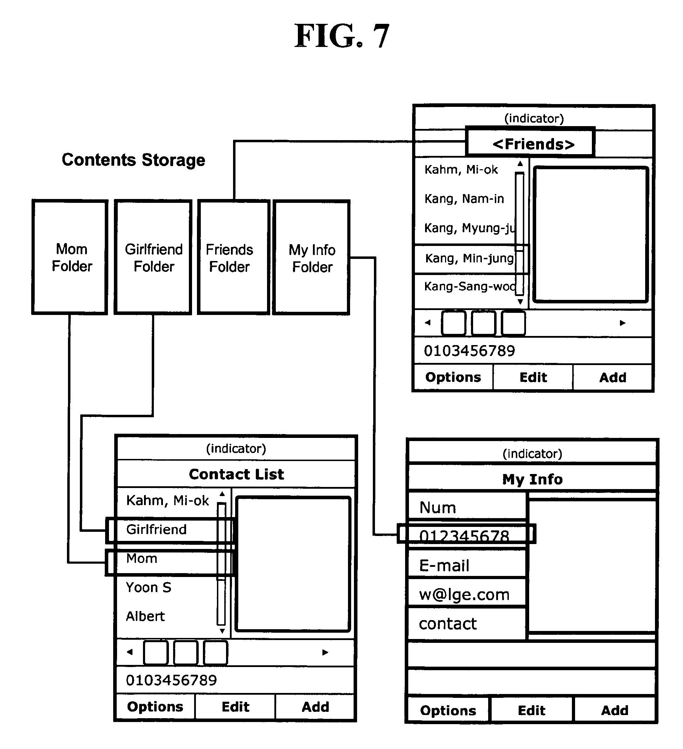

FIG. 7 shows exemplary user interface screens according to embodiments of the present invention.

Various types of contents (e.g., images, videos, text, memos, graphics, animation, music files, sounds, ring tones, etc.) may be stored in folders (or other storage locations) that are provided for each call recipient or for the user himself. For example, the user may have set four folders (e.g., Mom, Girlfriend, Friends, My Info) that contain files that are respectively related thereto. Each entry in a contact list (e.g., phone book, address book, etc.) can have a linked folder for storing files related to that entry. Also, the user himself may have a folder containing his personal information.

Various features of the present invention may be summed up as follows:

The present invention provides a method for managing information of a mobile terminal comprising: checking whether a communication is received from a transmission side mobile terminal; searching a folder or other memory location that contains multiple types of data contents that are all associated with a phone number of the transmission side mobile terminal; and outputting at least one or more contents stored in the searched folder or other memory location.

Here, the communication may be considered to be an event that occurs when data or a call a received from a call sender. The communication may be an incoming call or other type of data transfer. The step of searching the folder may comprise: detecting the phone number of the transmission side mobile terminal from the received call; and searching the folder corresponding to the detected phone number of the transmission side mobile terminal. The folder may store at least one or more image files, video files, sound files and messages. The outputting step may further comprise: providing multimedia data in a sequential or random manner.

Also, the present invention provides a method for managing information of a mobile terminal which outputs contents stored in a folder according to a user selection, comprising: checking whether a call function is activated; searching a phone number corresponding to a folder in which multiple types of data contents are stored and associated with the phone number; and transmitting a call to a reception side mobile terminal corresponding to the searched phone number and concurrently outputting the multiple types of data contents that are associated with the searched phone number.

The folder may comprise at least one or more contents related to image files, sound files, and/or messages.

Additionally, the present invention provides a mobile terminal comprising: a transceiver to transmit and receive signals; an output unit to provide outputs to a user; a memory to store data; and a processor cooperating with the transceiver, the output unit, and the memory such that, an incoming transmission or call received from a caller via the transceiver or an outgoing transmission or call to be sent to at least one recipient via the transceiver is associated with data items related to the caller or the recipient, the data items previously stored in the memory, and a plurality of the data items associated with the caller or the recipient are output to the user via the output unit.

The associating may be achieved by mapping the data items to a phone number or other indicator that identifies the incoming or outgoing transmission, the mapping resulting in a relationship being established between the data items and the incoming or outgoing transmission. The incoming or outgoing transmission may involve voice, text, image, and/or multimedia data transfer. The output unit may provide visual, audible, and/or tactile outputs. The data items may be organized and stored in memory in one or more folders or other storage locations, each folder having one or more sub-folders or other storage sub-locations therein.

The display unit may provide a user interface comprising: a screen to concurrently display information in at least a first area and a second area, the first area to display one or more items stored in a contact list, and the second area to display one or more digital files that are linked to a particular item of the contact list. At least one of the items displayed in the first area and/or at least one of the digital files displayed in the second area is/are user selectable. The user interface may further comprise: a third area to display user selectable options or functions to allow additional managing of information. The user interface may further comprise: a fourth area to display a user selectable menu or list as a pop-up window. The user interface may further comprise: an additional output unit to provide audible and/or tactile outputs related to the one or more electronic files that are linked to the particular item of the contact list.

Furthermore, the present invention provides a method for managing information in a mobile communication terminal, the method comprising: storing a plurality of digital files for one or more persons that respectively have a dedicated memory location; linking the stored digital files with their respective persons previously stored in a contact list; and retrieving the linked digital files related to a particular person, when communication with that particular person is to be performed or is in progress.

The storing step may utilize an internal storage medium within the mobile communication terminal or an external storage medium that is operatively attached to the mobile communication terminal. The dedicated memory location may be a contents folder with optional sub-folders therein. The linking step may further comprise: mapping the stored digital files such that a relationship between multiple digital files and each call sender or call recipient is established to allow retrieval. The mapping may be achieved by attaching an identifier to those digital files that are to be associated with the particular call sender or call recipient. The retrieving step may further comprise: processing the digital file to provide at least one of a visual output, an audible output, and a tactile output. If a displayed image related to the call recipient is selected or activated by the user, a call connection may be established to that call recipient. The call connection may involve at least one of a voice, text, image, or multimedia data transfer.

Additionally, the multiple digital music files may be reproduced by random playback when an incoming transmission or call is received. The displaying step may involve showing multiple images in a slide show format when an incoming transmission or call is received. The displaying step may involve showing at least one content in a translucent manner to overlap other content.

The method may further comprise: if a digital file related to the call sender is received while a voice call with that call sender is in progress, storing the received digital file into the dedicated memory location for that call sender.

The method may further comprise one of the following: (1) outputting, based on the retrieved digital files, ring tones or screen graphics when a call or data communication is received; (2) outputting, based on the retrieved digital files, a privacy image used during video telephony or outputting background images in a slide show format, while a call or data communication is in progress; (3) outputting, based on the retrieved digital files, a reception indication sound or background graphics of the retrieved digital files when a text or multimedia message is received; (4) outputting, based on the retrieved digital files, multiple images in a slide show format while a display screen is in idle mode; (5) transmitting at least one of contents stored in the retrieved digital files, if a voice call function or data transmission function is activated while browsing the contents.

As so far described, the method for providing caller information (i.e., managing information) of the mobile terminal can enhance user convenience by setting one or more folders that store at least one or more contents with respect to each recipient (or the user himself). For example, the phone number of the transmission side mobile terminal can have a folder containing information (e.g., data, images, video, audio, text and various other types of multimedia data) that are linked to allow later retrieval and processing (i.e., to provide visual, audible, and/or tactile outputs).

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A method for managing information of a mobile terminal comprising:
checking whether a communication is received from a transmission side mobile terminal;
searching a folder or other memory location that contains multiple types of data contents that are all associated with a phone number of the transmission side mobile terminal; and
outputting at least one or more contents stored in the searched folder or other memory location.

2. The method of claim 1, wherein the communication is an incoming call or other type of data transfer.

3. The method of claim 2, wherein the folder stores at least one or more image files, video files, sound files and messages.

4. The method of claim 3, wherein the outputting step further comprises:
providing multimedia data in a sequential or random manner.

5. A method for managing information of a mobile terminal which outputs contents stored in a folder according to a user selection, comprising:
checking whether a call function is activated;
searching a phone number corresponding to a folder in which multiple types of data contents are stored and associated with the phone number; and
transmitting a call to a reception side mobile terminal corresponding to the searched phone number and concurrently outputting the multiple types of data contents that are associated with the searched phone number.

6. The method of claim 5, wherein the folder comprises at least one or more contents related to image files, sound files, and/or messages.

7. A mobile terminal comprising:
a transceiver to transmit and receive signals;
an output unit to provide outputs to a user;
a memory to store data; and
a processor cooperating with the transceiver, the output unit, and the memory such that,
an incoming transmission or call received from a caller via the transceiver or an outgoing transmission or call to be sent to at least one recipient via the transceiver is associated with data items related to the caller or the recipient, the data items previously stored in the memory, and
a plurality of the data items associated with the caller or the recipient are output to the user via the output unit.

8. The mobile terminal of claim 7, wherein the associating is achieved by mapping the data items to a phone number or other indicator that identifies the incoming or outgoing transmission, the mapping resulting in a relationship being established between the data items and the incoming or outgoing transmission.

9. The mobile terminal of claim 8, wherein the incoming or outgoing transmission involves voice, text, image, and/or multimedia data transfer.

10. The mobile terminal of claim 8, wherein the output unit provides visual, audible, and/or tactile outputs.

11. The mobile terminal of claim 8, wherein the data items are organized and stored in memory in one or more folders or other storage locations, each folder having one or more sub-folders or other storage sub-locations therein.

12. The mobile terminal of claim 7, wherein the display unit provides a user interface comprising:
a screen to concurrently display information in at least a first area and a second area,
the first area to display one or more items stored in a contact list, and
the second area to display one or more digital files that are linked to a particular item of the contact list.

13. A method for managing information in a mobile communication terminal, the method comprising:
storing a plurality of digital files for one or more persons that respectively have a dedicated memory location;
linking the stored digital files with their respective persons previously stored in a contact list; and
retrieving the linked digital files related to a particular person, when communication with that particular person is to be performed or is in progress.

14. The method of claim 13, wherein the storing step utilizes an internal storage medium within the mobile communication terminal or an external storage medium that is operatively attached to the mobile communication terminal.

15. The method of claim 13, wherein the dedicated memory location is a contents folder with optional sub-folders therein.

16. The method of claim 13, wherein the linking step further comprises:
mapping the stored digital files such that a relationship between multiple digital files and each call sender or call recipient is established to allow retrieval.

17. The method of claim 16, wherein the mapping is achieved by attaching an identifier to those digital files that are to be associated with the particular call sender or call recipient.

18. The method of claim 13, wherein the retrieving step further comprises:
processing the digital file to provide at least one of a visual output, an audible output, and a tactile output.

19. The method of claim 18, wherein if a displayed image related to the call recipient is selected or activated by the user, a call connection is established to that call recipient.

20. The method of claim 19, wherein the call connection involves at least one of a voice, text, image, or multimedia data transfer.
